(19) Europäisches Patentamt / European Patent Office / Office européen des brevets

(11) **EP 2 388 937 B1**

(12) # EUROPÄISCHE PATENTSCHRIFT

(45) Veröffentlichungstag und Bekanntmachung des Hinweises auf die Patenterteilung:
**24.06.2015  Patentblatt 2015/26**

(51) Int Cl.:
*H04J 3/14* *(2006.01)*  *H04L 1/00* *(2006.01)*
*H04L 1/24* *(2006.01)*  *H04L 25/14* *(2006.01)*
*H04L 1/20* *(2006.01)*  *H04J 3/16* *(2006.01)*

(21) Anmeldenummer: **11401023.4**

(22) Anmeldetag: **17.02.2011**

(54) **Verfahren zur Übertragung eines digitalen Signals im inversen Multiplex, insbesondere über ein Optical Transport Network und Empfangseinrichtung für ein System zur Realisierung des Verfahrens**

Method for transmitting a digital signal in inverse multiplex, in particular over an optical transport network and receiver device for a system for realising the method

Procédé de transmission d'un signal numérique en multiplexe inverse, notamment par un réseau de transport optique et dispositif de réception pour un système destiné à la réalisation du procédé

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.05.2010  DE 102010020772**

(43) Veröffentlichungstag der Anmeldung:
**23.11.2011  Patentblatt 2011/47**

(73) Patentinhaber: **ADVA Optical Networking SE 82152 Martinsried / München (DE)**

(72) Erfinder:
• **Bleck, Oliver 82538 Geretsried (DE)**
• **Elbers, Jörg-Peter 82256 Fürstenfeldbruck (DE)**
• **Färbert, Andreas 81827 München (DE)**
• **Fürst, Cornelius 82256 Fürstenfeldbruck (DE)**

(74) Vertreter: **Eder, Thomas Eder Schieschke & Partner mbB Patentanwälte Elisabethstrasse 34/II 80796 München (DE)**

(56) Entgegenhaltungen:
**US-A1- 2004 047 408     US-A1- 2007 014 572 US-B1- 6 438 717**

• **"Interfaces for the Optical Transport Network (OTN); G.709/Y.1331 (12/09)", ITU-T STANDARD, INTERNATIONAL TELECOMMUNICATION UNION, GENEVA ; CH, Nr. G.709/Y.1331 (12/09), 22. Dezember 2009 (2009-12-22), Seiten 1-218, XP017467193, [gefunden am 2010-04-21]**
• **"IEEE Standard for Information TechnologyTelecommunications and Information Exchange Between SystemsLocal and Metropolitan Area NetworksSpecific Requirements Part 3: Carrier Sense Multiple Access With Collision Detection (CSMA/CD) Access Method and Physical Layer Specifications Amendment: Media Acces", IEEE STANDARD; [IEEE STANDARD], IEEE, PISCATAWAY, NJ, USA, 1. Januar 2002 (2002-01-01), Seiten _1-516, XP017603544, ISBN: 978-0-7381-3287-7**

**Beschreibung**

Die Erfindung betrifft ein Verfahren zur Übertragung eines digitalen Signals im inversen Multiplex, insbesondere über ein Optical Transport Network (OTN), mit den Merkmalen des Oberbegriffs des Patentanspruchs 1 sowie eine Empfangseinrichtung für ein System zur Realisierung des Verfahrens mit den Merkmalen des Oberbegriffs des Patentanspruchs 15. Die Übertragung eines digitalen Signals im inversen Multiplex ermöglicht die Verwendung von mehreren, parallelen Übertragungsstrecken, beispielsweise mehreren parallel verlaufenden Glasfasern, mit geringerer Bandbreite als dies für die Übertragung des digitalen Signals erforderlich wäre. Dabei wird das digitale Signal in mehrere Teilsignale aufgeteilt, die jeweils über eine der parallel verlaufenden Übertragungsstrecken von einer Sendeseite an eine Empfangsseite der Übertragungsstrecken übertragen werden. An der Empfangsseite werden die Teilsignale wieder unter Berücksichtigung der korrekten Reihenfolge der Bits bzw. Bytes, die über unterschiedliche Übertragungsstrecken übertragen wurden, zu einem digitalen Empfangssignal zusammengesetzt. Die Übertragung im inversen Multiplex ermöglicht somit die weitere Verwendung von bestehenden, parallelen Übertragungsstrecken (mit "parallel" ist hier streng genommen nur ausgedrückt, dass die einzelnen Übertragungsstrecken einen gemeinsamen sendeseitigen Anfangspunkt und einen gemeinsamen empfangsseitigen Endpunkt aufweisen), auch wenn ein digitales Sendesignal eine höhere Bandbreite erfordert als die von jeder einzelnen Übertragungsstrecke zur Verfügung gestellte Bandbreite. Auch bestehende Sendeeinheiten und Empfangseinheiten der einzelnen Übertragungsstrecken können ggf. weiter verwendet werden, insbesondere diejenigen Teile, die beispielsweise eine Signalwandlung oder eine Signalaufbereitung der einzelnen Teilsignale bewirken.

Für die optische Signalübertragung über ein Optical Transport Network (OTN) ist im internationalen Standard ITU-T G.709/Y.1331 festgelegt, wie die Übertragung bzw. die Signalverarbeitung an den sendeseitigen und empfangsseitigen Schnittstellen zu erfolgen hat.

Das einem bestimmten Service, beispielsweise einem Optical-channel Transport Unit der Kategorie 3 oder 4 (OTU3 bzw. OTU4 Service), entsprechende digitale Signal wird zur Übertragung im inversen Multiplex in einzelne Teile, die sogenannten Logical Lanes (LL) aufgesplittet[OB1], wobei dann jeweils eine einzige oder mehrere LL zu einem Teilsignal zusammengefasst werden können. Jedes der so erzeugten Teilsignale kann dann über jeweils eine zugeordnete Übertragungsstrecke vom sendeseitigen zum empfangsseitigen Ende übertragen werden. Dabei können sich die Laufzeiten der einzelnen Teilsignale gravierend unterscheiden, so dass für das Zusammensetzen der Teilsignale zu einem digitalen Empfangssignal, welches dem digitalen Sendesignal entspricht, eine Synchronisation der Teilsignale derart erfolgen muss, dass die einzelnen Blöcke von Bytes, die jeweils einer LL zugeordnet sind, im digitalen Empfangssignal dieselbe Reihenfolge aufweisen wie im digitalen Sendesignal.

Anders als bei einem einzigen digitalen Signal, welches über eine einzige zugeordnete Übertragungsstecke übertragen wird, wird die Performance der Gesamt-Übertragungsstrecke bei der Übertragung eines Signals im inversen Multiplex durch Parameter der mehreren parallelen Übertragungsstrecken beeinflusst. Es ist daher nötig oder zumindest wünschenswert, Parameter zu ermitteln, welche die Übertragungsqualität der einzelnen parallelen Übertragungsstrecken kennzeichnen. Diese können dann dazu verwendet werden, um alle oder ausgewählte Übertragungsstrecken oder das betreffende digitale Sendesignal jeweils separat so zu beeinflussen, dass sich eine optimale Performance über die betreffende Übertragungsstrecke oder die Gesamt-Übertragungsstrecke ergibt.

Es ist selbstverständlich möglich, auch bei der Signalübertragung im inversen Multiplex die Performance der einzelnen, parallelen Übertragungsstrecken in üblicher Weise dadurch zu ermitteln, dass die einzelnen Teilsignale, beispielsweise hinsichtlich der Bitfehlerrate, ausgewertet werden, bevor diese wieder zu dem digitalen Empfangssignal zusammengesetzt werden. Allerdings ist diese Vorgehensweise mit einem entsprechend hohen Aufwand, insbesondere schaltungstechnischen Aufwand, verbunden. Zudem müsste jedes der Teilsignale für sich genommen so beschaffen sein, dass ein empfangsseitiges Erkennen oder Korrigieren von Übertragungsfehlern möglich ist.

Dieses Verfahren wird auch in der US 2004/0047408 A1 und der US 6,438,717 B1 verwendet, die eine Vorrichtung zur Analyse eines Datenlinks bzw. eine Vorrichtung zum Prüfen der Bitfehlerrate eines parallelen Hochgeschwindigkeitsdatenlinks beschreiben. Auch bei diesen Datenlinks erfolgt ein Umformatieren eines Datensignals, welches aus mehreren parallelen Datenströmen bestehen kann, in eine andere Anzahl von mehreren (synchronen) Datenströmen, wobei jeder dieser Datenströme einer separaten Übertragungsstrecke zugeführt wird. In einem Testmodus der gesamten Übertragungsstrecke, wird jeder der Übertragungsstrecken anstelle von Nutzdaten ein spezielles Testsignal zugeführt. Das empfangsseitig detektierte Testsignal wird auf das Vorliegen von Bitfehlern untersucht. Damit wird für jede einzelne Übertragungsstrecke die Bitfehlerrate durch das unmittelbare Prüfen des am Ende jeder Übertragungsstrecke empfangenen Testsignals bestimmt.

Nachteilig hierbei ist jedoch, dass für die Bestimmung der Bitfehlerrate der Zugriff auf jedes einzelne Teilsignal gewährleistet sein muss, welches am Ende jeder der Übertragungsstrecken empfangen wird. Dies ist mit einem entsprechenden Hardwareaufwand verbunden. Zudem ist die Bestimmung der Bitfehlerrate nur in einem Testmodus möglich.

Es ist daher Aufgabe der vorliegenden Erfindung ein Verfahren zur Übertragung eines digitalen Signals im inversen Multiplex, insbesondere über ein Optical Transport Network (OTN), zu schaffen, bei dem auf einfache Weise Parameter ermittelt werden können, welche die Übertragungsqualität der jedem Teilsignal zugeordneten Übertragungsstrecken kennzeichnen und/oder Rückschlüsse zulassen, durch welche Fehlermechanismen der betreffenden Übertragungsstrecke die Übertragungsqualität beeinträchtigt wird. Des Weiteren liegt der Erfindung die Aufgabe zugrunde, eine Empfangseinrichtung zur Realisierung eines derartigen Signalübertragungssystems zu schaffen, bei dem das Verfahren nach der Erfindung verwirklicht ist.

Die Erfindung löst diese Aufgabe mit den Merkmalen der Patentansprüche 1 bzw. 15.

Die Erfindung geht von der Erkenntnis aus, dass es in vorteilhafter Weise möglich ist, die auch auf der Empfangsseite eines im inversen Multiplex arbeitenden Signalübertragungssystem vorhandene Information über die Zuordnung von Bytegruppen bzw. Bytepositionen des zu übertragenden Signals zu den Teilsignalen, die über jeweils eine zugeordnete Übertragungsstrecke übertragen werden, zur Beurteilung der Übertragungsqualität der jeweils einzelnen Übertragungsstrecken zu verwenden.

Hierzu werden Bitfehler im digitalen Empfangssignal einschließlich der Position des Bitfehlers (zumindest der Byte-Position des Bitfehlers) ermittelt und jeweils das zugehörige Teilsignal bestimmt. Damit kann durch eine Auswertung des digitalen Empfangssignals festgestellt werden, auf welcher der Übertragungsstrecken der Bitfehler entstanden ist.

Geeignete Parameter zur Beurteilung der Übertragungsqualität der einzelnen Übertragungsstrecken sind beispielsweise die Bitfehlerrate oder die spezifischen Bitfehlerraten für die Fälle, dass ein Bit mit dem Wert logisch "0" bzw. logisch "1" falsch übertragen wurde. Gegebenenfalls können auch bestimmte Bitfehler in bestimmten Mustern (d.h. mit bestimmten vorhergehenden bzw. nachfolgenden Bitwerten) ausgewertet und abhängig hiervon Rückschlüsse auf Fehlerursachen gezogen werden.

Die so ermittelten Parameter für die Qualität der Signalübertragung über die einzelnen Übertragungsstrecken können auch dazu verwendet werden, um jeweils Übertragungseigenschaften zu steuern bzw. nachzuregeln. Beispielsweise kann die Schwelle des Empfängers am Ende jeder Übertragungstrecke für das Detektieren von "0" bzw. "1" abhängig von einem so bestimmten Parameter geändert oder in einer geschlossenen Regelschleife auf einen optimalen Wert geregelt werden, bei dem sich z.B. für die betreffende Übertragungsstrecke die minimale Bitfehlerrate ergibt.

Das digitale Sendesignal kann eine Rahmenstruktur aufweisen und beispielsweise nach dem bekannten OTN Standard Sendesignal in mehrere Logical Lanes aufgeteilt werden, welche jeweils eine bestimmte Anzahl von Bytes des digitalen Sendesignals beinhalten. Jeweils eine oder mehrere Logical Lanes können dabei zu jeweils einem der mehreren Teilsignale zusammengefasst sein, wobei die Zuordnung der Bytes des Sendesignals zu den Logical Lanes und die Zuordnung der Logical Lanes zu den Teilsignalen auch auf der Empfangsseite bekannt ist.

An dieser Stelle sei erwähnt, dass für die vorliegende Beschreibung der Begriff der Logical Lanes (LL), welcher der OTN Nomenklatur entnommen ist, in einer breiteren Bedeutung verwendet wird. Mit einer LL sei im Folgenden ein realer oder virtueller Datenstrom bezeichnet, welcher durch eine Aufteilung der Daten bzw. Bytes des Sendesignals entsteht. Eine oder mehrere LL können jeweils zu einem Teilsignal zusammengefasst werden, welches über eine zugeordnete Übertragungsstrecke übertragen wird. Die Zuordnung der Daten des Sendesignals zu den Teilsignalen muss selbstverständlich nicht in zwei tatsächlich separierten, aufeinanderfolgenden Schritten geschehen, indem zunächst die LL erzeugt werden und anschließend aus den LL die Teilsignale. Vielmehr können durch die Anwendung entsprechende Zuordnungsvorschriften die Teilsignale auch unmittelbar erzeugt werden. Insbesondere wenn nur eine einzige LL für ein Teilsignal verwendet wird, d.h. das Teilsignal nur aus einer einzigen LL besteht und somit der Datenstrom des Teilsignals identisch ist mit dem realen oder virtuellen Datenstrom der betreffenden LL, kann die Erzeugung des Teilsignals selbstverständlich entsprechend vereinfacht werden. Als trivialen Fall umfasst die Erfindung auch die Alternative, dass alle Teilsignale jeweils aus nur einer einzigen LL bestehen. In diesem Fall ist der Datenstrom aller Teilsignale jeweils identisch mit den betreffenden (realen oder virtuellen) Datenströmen der LL, so dass in diesem Fall nicht mehr zwischen einer LL und dem betreffenden Teilsignal unterschieden werden muss.

Nach einer Ausgestaltung des Verfahrens nach der Erfindung kann das digitale Sendesignal vor der Aufteilung in die Teilsignale gescrambelt und empfangsseitig das digitale Empfangssignal de-scrambelt werden, bevor das Detektieren von Bitfehlern in der vorbekannten Bitstruktur erfolgt. Durch Scrambeln wird im Allgemeinen erreicht, dass sich eine Gleichverteilung von Bitwerten mit logisch "0" und logisch "1" ergibt.

Zur Ermittlung von spezifischen Bitfehlerraten für die Bitwerte logisch "0" und logisch "1" für ausgewählte oder alle Übertragungsstrecken kann in diesem Fall das noch gescrambelte Empfangssignal oder das erneut identisch gescrambelte zuvor bereits de-scrambelte Empfangssignal an denjenigen Bitpositionen der vorbekannten Bitstruktur, an welchen Bitfehler festgestellt wurden, mit dem de-scrambelten Empfangssignal verglichen werden[OB2] (der Vergleich kann sich hier selbstverständlich auf das Erfassen der Werte der Bits an den Positionen der festgestellten Bitfehler beschränken). Auf diese Weise kann festgestellt werden, ob das fehlerhaft übertragene Bit ein logisch "0" Bit oder ein logisch "1" Bit war.

Nach einer Ausführungsform des Verfahrens nach der Erfindung kann eine vorbekannte Bitstruktur in einen oder mehrere vorgegebene Blöcke von Bytes eines oder mehrerer Rahmen des digitalen Sendesignals geschrieben werden. Auf der Empfangsseite können dann die vorbekannte Bitstruktur in den entsprechenden vorgegebenen Blöcken von Bytes des digitalen Empfangssignals erfasst und mögliche Bitfehler in der vorbekannten Bitstruktur detektiert werden. Aus der Position eines erkannten Bitfehlers im Empfangssignal kann dann wiederum ermittelt werden, welchem Teilsignal und damit welcher Übertragungsstrecke die detektierten Bitfehler zuzuordnen sind.

Die vorgegebenen Blöcke von Bytes, in die die vorbekannte Bitstruktur geschrieben wird, sind vorzugsweise solche Blöcke, die für die Übertragung des Nutzsignals nicht benötigt werden. Beispielsweise kann die Bitstruktur in "Fixed Stuff" (FS) Bytes jeder der vier Zeilen eines OTU4 Rahmens geschrieben werden[OB3], da diese Bytes (jeweils acht Bytes der Nummern 3817 bis 3824) bei einer derartigen inversen Multiplexstruktur nicht benötigt werden. Wird keine Vorwärtsfehlerkorrektur (FEC) verwendet, so kommen als alternative Positionen auch die für die FEC reservierten Bytes des Rahmens (Bytes mit den Nummern 3825 bis 4080 jeder Zeile) in Frage.

Die Länge der vorbekannten Bitstruktur kann so gewählt sein, dass die Bitstruktur auf die vorgegebenen Blöcke von Bytes mehrerer Rahmen verteilt übertragen wird. Hierdurch kann ein ausreichend langes vorbekanntes Muster gewählt werden, das eine ausreichend große Anzahl von unterschiedlichen Teilbitfolgen aufweist, beispielsweise um eine statistisch möglichst zutreffende Bitfehlerrate für die über die Übertragungsstrecken übertragenen Teile der Nutzsignale zu erhalten.

Um auf der Empfangsseite auf möglichst einfache Weise den Start der vorbekannten Bitstruktur ermitteln zu können kann der Anfang der Bitstruktur vorzugsweise auf das erste vorgegebene Byte eines Rahmens eines entsprechend strukturierten Sendesignals gelegt werden, wobei der Rahmen vorzugsweise eine vorbestimmte empfangsseitig bekannte Kennung aufweist. Beispielsweise kann der Start der Bitstruktur auf das erste vorgegebene Byte der vorgegebenen Blöcke von Bytes zur Aufnahme der Bitstruktur eines Rahmens gelegt werden, der einen (beliebig definierbaren) Marker mit einem vorbekannten Wert aufweist. Beispielsweise kann die Bitstruktur jeweils in einem Rahmen beginnen, in dem der Logical Lane Marker gleich Null ist oder einen anderen vorbekannten Wert aufweist.

An dieser Stelle sei darauf hingewiesen, dass der Begriff der Rahmenstruktur in der vorliegenden Beschreibung nicht nur vordefinierte Rahmen im Sinne des OTN Standards umfassen soll, sondern sämtliche digitalen Signale die eine Rahmen- oder Paketstruktur aufweisen, wie beispielsweise auch nach dem IEEE 802.3 Standard.

Die Positionen der vorgegebenen Blöcke von Bytes innerhalb der Rahmen können vorzugsweise so gewählt werden, dass die Bytes der vorbekannten Bitstruktur unter Berücksichtigung der Zuordnungsvorschrift für die Bytes der Rahmen zu den Logical Lanes bzw. der Logical Lanes zu den Übertragungsstrecken im Wesentlichen gleichmäßig auf die Logical Lanes oder im Wesentlichen gleichmäßig auf die Teilsignale (und damit auf die Übertragungsstrecken) verteilt werden. Hierdurch können möglichst zutreffende Aussagen über die Übertragungsqualität aller Übertragungsstrecken getroffen werden.

Nach einer Ausgestaltung der Erfindung kann die Position des einen oder der mehreren vorgegebenen Blöcke von Bytes innerhalb jedes Rahmens konstant bleiben und die Zuordnung der Bytes oder der Blöcke von Bytes zu den Logical Lanes nach einem rollierenden System erfolgen. Hierdurch wird erreicht, dass nicht immer dieselben Teilbitstrukturen (der vorgegebenen Bitstruktur) denselben Logical Lanes zugeordnet und damit über dieselben Übertragungsstrecken übertragen werden. Dies trägt wiederum zu einer möglichst zutreffenden Aussage über die Übertragungsqualität aller Übertragungsstrecken bei.

Nach einer bevorzugten Ausführungsform des Verfahrens nach der Erfindung unter Verwendung einer vorbekannten Bitstruktur im zu übertragenden digitalen Signal wird die vorbekannte Bitstruktur zumindest entsprechend der Anzahl N von Logical Lanes mal hintereinander übertragen. Gleichzeitig wird das rollierende System für die Zuordnung der Bytes oder der Blöcke von Bytes zu den Logical Lanes und die Position des einen oder der mehreren vorgegebenen Blöcke von Bytes innerhalb jedes Rahmens so gewählt und aufeinander abgestimmt, dass nach einer N maligen Übertragung der vorbekannten Bitstruktur die Bitstruktur jeweils einmal vollständig innerhalb jeder Logical Lane enthalten ist.

Hierdurch kann die Aussage über die Übertragungsqualität der einzelnen Übertragungsstrecken jeweils mit annähernd derselben Aussagekraft getroffen werden, auch wenn nicht über jede Übertragungsstrecke dieselbe Anzahl von Logical Lanes übertragen wird.

Nach einer anderen Ausführungsform der Erfindung kann das zu übertragende digitale Sendesignal eine Redundanz zur Ermöglichung einer Vorwärtsfehlerkorrektur beinhalten, so dass auf der Empfangsseite auf das digitale Empfangssignal eine Vorwärtsfehlerkorrektur angewendet werden kann. Mittels der Vorwärtsfehlerkorrektur oder durch den Vergleich des unkorrigierten mit dem fehlerkorrigierten Signal kann dann die Bit-Position oder zumindest die Byte-Position jedes korrigierbaren Bitfehlers innerhalb des betreffenden Rahmens des Empfangssignals ermittelt werden. Aus der Position des Bitfehlers im Empfangssignal kann wiederum ermittelt werden, welcher Logical Lane bzw. welchem Teilsignal die detektierten Bitfehler zuzuordnen sind.

Hierbei ist es somit nicht erforderlich, in das digitale Sendesignal eine vorbekannte Bitstruktur zu schreiben. Da eine Vorwärtsfehlerkorrektur in vielen Fällen ohnehin eingesetzt wird, ergibt sich durch diese Ausgestaltung der Erfindung auch nur ein geringer zusätzlicher Aufwand, um die Performance der einzelnen Übertragungsstrecken zu überwachen bzw. zu steuern oder zu regeln.

Wird zusätzlich das digitale Sendesignal vor der Aufteilung in die Teilsignale gescrambelt und empfangsseitig das digitale Empfangssignal wieder de-scrambelt, so kann dies bei entsprechenden Ausgestaltungen der Erfindung ebenfalls berücksichtig werden, wenn die spezifischen Bitfehlerraten oder spezifische Bitfehler ermittelt werden sollen. Hierzu wird zusätzlich zur Detektion eines Bitfehlers (einschließlich dessen Bitposition) im de-scrambelten digitalen Empfangssignal im noch gescrambelten digitalen Empfangssignal detektiert, ob der Bitwert an der Position des fehlerhaft übertragenen Bits gleich logisch "0" oder logisch "1" ist.

Wird das vorstehend erläuterte Verfahren verwendet, bei dem im zu übertragenden Signal eine vorbekannte Bitstruktur enthalten ist, so muss das Detektieren von Bitfehlern in der vorbekannten Bitstruktur selbstverständlich erfolgen, bevor das de-scrambelte digitale Empfangssignal einer möglicherweise ebenfalls vorhandenen Vorwärtsfehlerkorrektur unterzogen wird.

Werden die Bitfehler mittels einer Vorwärtsfehlerkorrektur detektiert und korrigiert und sollen die spezifischen Bitfehlerraten für die Bitwerte logisch "0" und logisch "1" für ausgewählte oder alle Übertragungsstrecken oder weitere Informationen über die tatsächlichen Bitfehler ermittelt werden, so existieren hier mehrere Möglichkeiten:

Beispielsweise kann mittels der Vorwärtsfehlerkorrektur die Position eines Bitfehlers im de-scrambelten digitalen Empfangssignal und hieraus im noch gescrambelten unkorrigierten digitalen Empfangssignal der Wert des (fehlerhaft) übertragenen Bits an der Fehlerposition ermittelt werden.

Es kann jedoch auch das noch gescrambelte (und noch fehlerbehaftete) digitale Empfangssignal mit dem zuvor de-scrambelten, jedoch erneut identisch gescrambelten fehlerkorrigierten Empfangssignal verglichen werden.

In beiden Fällen kann so festgestellt werden, ob das jeweils fehlerhaft übertragene Bit (im digitalen, schon gescrambelten Sendesignal) ein logisch "0" Bit oder ein logisch "1" Bit war bzw[OB5]. ob das fehlerhaft übertragene Bit im digitalen (noch gescrambelten) Empfangssignal ein logisch "0" Bit oder ein logisch "1" Bit ist.

Da das Aufteilen der Rahmen des digitalen Sendesignals in Logical Lanes üblicherweise Byte-weise bzw. in Gruppen von Bytes erfolgt, kann es zur Bestimmung der spezifischen Bitfehlerraten auch genügen, wenn anstelle der tatsächlichen Bitposition die Byte-Position bzw. die Position der Gruppe von Bytes ermittelt wird. Soll jedoch auch die Art des Bitfehlers einschließlich der benachbarten Bitstruktur näher bestimmt werden, so muss die tatsächliche Bitposition detektiert werden.

Weitere Ausführungsformen der Erfindung ergeben sich aus den Unteransprüchen.

Die Erfindung wird nachstehend anhand in der Zeichnung dargestellter Ausführungsbeispiele näher erläutert. In der Zeichnung zeigen:

Fig. 1 ein schematisches Blockdiagramm der für das Verständnis der Erfindung wesentlichen Funktionseinheiten einer ersten Ausführungsform eines Systems zur Übertragung eines digitalen Signals im inversen Multiplex;

Fig. 2 eine schematische Darstellung einer speziellen Struktur eines Rahmens eines OTU4 Services/Signals[OB6] gemäß dem Standard ITU-T G.709/Y.1331 (die bei der Verwendung einer bestimmten ODU Multiplexstruktur entsteht);

Fig. 3 eine schematische Darstellung zur Erläuterung der Aufteilung eines digitalen Sendesignals in Byte-Blöcke definierter Länge und der Zuordnung der Byte-Blöcke zu Logical Lanes sowie zur Erläuterung der Zuordnung von Logical Lanes zu jeweils einem von vier Teilsignalen, wobei jedes Teilsignal über eine von vier parallelen Übertragungsstrecken übertragen wird;

Fig. 4 ein schematisches Blockdiagramm ähnlich Fig. 1 einer zweiten Ausführungsform eines Systems zur Übertragung eines digitalen Signals im inversen Multiplex; und

Fig. 5 ein schematisches Blockdiagramm einer Variante der Ausführungsform eines Systems zur Übertragung eines digitalen Signals im inversen Multiplex nach Fig. 4.

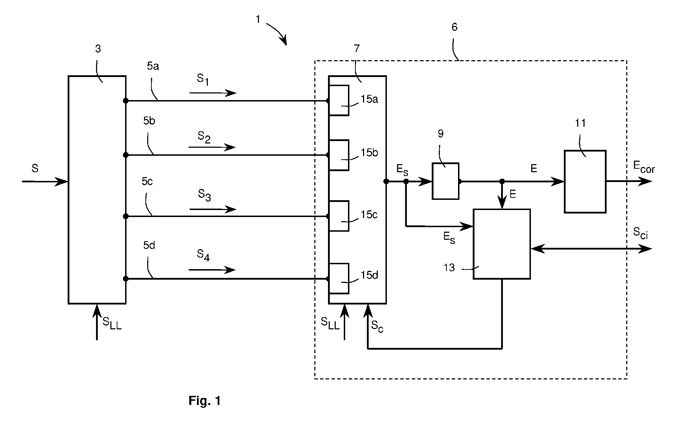

Das in Fig. 1 schematisch dargestellte System 1 zur Übertragung eines digitalen Signals im inversen Multiplex, insbesondere über ein Optical Transport Network (OTN), umfasst eine Sendeeinrichtung 3, welche über mehrere, im dargestellten Ausführungsbeispiel vier physikalische Übertragungsstrecken 5a, 5b, 5c, 5d mit einer Empfangseinrichtung 6 verbunden sind. Die Empfangseinrichtung 6 umfasst eine Empfangseinheit 7,[OB7] einen De-scrambler 9, eine Vorwärts-Fehlerkorrektureinheit (FEC-Einheit) 11 und eine Detektoreinheit 13.

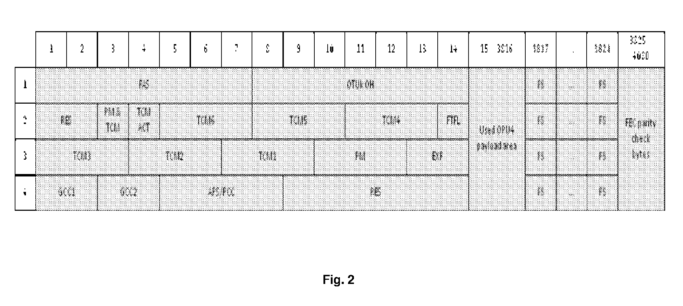

Der Sendeeinrichtung ist ein digitales Sendesignal S zugeführt, welches üblicherweise eine Rahmenstruktur aufweist. Das digitale Sendesignal S kann beispielsweise die Rahmenstruktur eines OTU4 Service gemäß dem internationalen Standard ITU-T G.709/Y.1331 - Interfaces for the Optical Transport Network (OTN) - aufweisen[OB8].[TE9] Eine derartige Darstellung zeigt Fig. 2. Jeder Rahmen des digitalen Sendesignals S besteht dabei aus vier Reihen oder Zeilen von jeweils 4080 Bytes (die selbstverständlich sequentiell im Sendesignal S enthalten sind). Bestimmten Bytes sind bestimmte Funktionen zugeordnet. Beispielsweise handelt es sich bei den ersten sieben Bytes der ersten Zeile eines Rahmens um die Bytes des Frame Alignment Signals (FAS), die zu Synchronisationszwecken verwendet werden. Auf die einzelnen Bedeutungen spezieller Bytes innerhalb des in Fig. 2 dargestellten OTU4 Rahmens muss jedoch in dieser Beschreibung nicht näher eingegangen werden.

Obwohl im Rahmen der folgenden Beschreibung der Figuren im Wesentlichen auf den OTN Standard Bezug genommen wird, lässt sich das allgemeine Prinzip der Erfindung auch auf andere Standards bzw. beliebige Signalformen anwenden bzw. übertragen.

Zur Übertragung des digitalen Sendesignals S im inversen Multiplex über die vier parallelen Übertragungsstrecken 5a, 5b, 5c, 5d splittet die Sendeeinrichtung 3 das digitale Sendesignal S in vier Teilsignale $S_1$, $S_2$, $S_3$ und $S_4$ auf und führt diese den Übertragungsstrecken 5a, 5b, 5c, 5d zu. Vor einem Splitten in die Teilsignale $S_1$, $S_2$, $S_3$ und $S_4$ kann die Sendeeinrichtung 3 das digitale Sendesignal S scrambeln[OB10],[TE11] beispielsweise mit dem Ziel, eine Gleichverteilung der logischen Zustände des Signals zu erreichen.

Für die Aufteilung des Sendesignals S in die Teilsignale $S_1$, $S_2$, $S_3$, $S_4$ sieht der internationale Standard ITU-T G.709/Y.1331 vor, zunächst jeweils Gruppen von aufeinanderfolgenden Bytes des Sendesignals S jeweils einem bestimmten (virtuellen) logischen Teilsignal, einer sogenannten Logical Lane, zuzuordnen. Der Standard sieht in seiner neuesten Version vor, dass ein OTN Service, also ein Sendesignal S, zum Zweck des inversen Multiplexen (d.h. Übertragen des OTN Signals über mehrere physikalische Interfaces) in sogenannte Logical Lanes (LL) aufgeteilt werden kann. Definiert sind derzeit vier LL für einen OTU3 Service sowie 20 LL für einen OTU4 Service.

Die Zuordnung der Bytes des Sendesignals zu den LL kann von der Sendeeinrichtung 3 beispielsweise so vorgenommen werden, dass jeweils Gruppen von 16 aufeinanderfolgenden Bytes zusammengefasst und jede Gruppe einer LL zugeordnet wird. Beispielsweise kann die erste Gruppe von 16 Bytes eines Rahmens eines OTU4 Services der LL mit der Nummer 0 (Kurzschreibweise im Folgenden LL0), die nächste Gruppe von 16 Bytes der LL1 usw. zugeordnet werden.

Die LL können dann von der Sendeeinrichtung entweder einzeln als Teilsignal $S_1$, $S_2$, $S_3$, $S_4$ oder zusammengefasst zu jeweils einem Teilsignal $S_1$, $S_2$, $S_3$, $S_4$ über eine bestimmte Übertragungsstrecke 5a, 5b, 5c, 5d übertragen werden. Das Zusammenfassen von mehreren LL kann beispielsweise so erfolgen, dass jeweils ein oder mehrere Blöcke von Bytes in einer bestimmten oder festen Reihenfolge (bezogen auf die Nummern der LL) sequentiell im betreffenden Teilsignal $S_1$, $S_2$, $S_3$, $S_4$ angeordnet werden.

Die Zuordnung der einzelnen 16-Byte Blöcke zu den LL kann in Abhängigkeit von einem rotierenden Zähler festgelegt werden. Der Zähler kann immer von einem Startwert bis zu einem Maximalwert laufen, der durch die Anzahl der LL bestimmt ist, wobei jeder Gruppe von Bytes jeweils der Zählerstand als Nummer der LL zugewiesen wird, welcher die betreffende Gruppe von Bytes zugeordnet wird. Der Startwert des rotierenden Zählers ist nach dem OTN Standard gleich Null, kann jedoch im Prinzip frei gewählt werden

Zu dem Zweck werden entweder definierte Bits des Multi Frame Alignment Signal Bytes (MFAS Bytes) des OTN Overheads (OH) verwendet (im Fall eines OTU3 Services) oder ein sogenannter Logical Lane Marker (LLM) definiert (für OTU4 Services) der als Teil der FAS [OB13]Bytes des OTN OH übertragen wird (für die Positionen der einzelnen funktionalen Bytes eines OTU4 Rahmens siehe Fig. 2).

Beispielsweise kann der LLM jeweils zwischen 0 und 239 rotieren, d.h. er wird beginnend bei 0 für den ersten Rahmen einer Multi-Framestruktur mit 240 Rahmen für jeden folgenden Rahmen um eins erhöht. Der Startwert $Z_0$ für den zwischen 0 und N-1 rotierenden Zähler (N soll ganz allgemein für die Anzahl der definierten LL stehen), der die Zuordnung der Blöcke von Bytes zu den LL bestimmt, kann aus dem Wert des LLM ermittelt werden nach der Beziehung

$$Z_0 = LLM \text{ modulo } 20$$

Damit wird der erste Block von Bytes (16 Byte Block im dargestellten Beispiel) jedes Rahmens der Multi-Framestruktur mit 240 Rahmen, bei dem der LLM ein Vielfaches von 20 ist, der LL0 zugeordnet und die folgenden Blöcke den LL1, LL2 etc. Der erste Block von Bytes jedes Rahmens dieser Multi-Framestruktur, bei dem der LLM gleich 1 bzw. ein Vielfaches von 20 + 1 ist (d.h. LLM modulo 20 = 1), wird der LL1 zugeordnet und die folgenden Blöcke den LL2, LL3 etc. Auf diese Weise erhält man ein rollierendes System, bei dem sich in jeder 240 Rahmenstruktur die Zuordnung der Blöcke von Bytes eines Rahmens zu den LL zwölf mal wiederholt.

Dadurch, dass das erste Byte der vorbekanten Bitstruktur in das erste Byte des reservierten Blocks von Bytes eines Rahmens mit einer vorbekannten Markierung geschrieben wird, nämlich mit einem LLM mit bestimmtem Wert, kann auf der Empfangsseite eine einfache Synchronisierung auf die vorbekannte Bitstruktur erfolgen. Die Empfangseinrichtung 6 muss lediglich die betreffende Markierung (z.B. den LLM) daraufhin prüfen, welchen Wert diese aufweist und kann daraus den in diesem Rahmen aufgenommenen Teil der vorbekannten Bitstruktur bzw. die betreffende Soll-Belegung zur Prüfung auf Bitfehler heranziehen.

Die Information, wie die Zuordnung der Blöcke von Bytes des digitalen Sendesignals S zu den LL und die Zuordnung der LL zu den Teilsignalen $S_1$, $S_2$, $S_3$, $S_4$ erfolgt, kann in der Sendeeinrichtung 3 fest vorgegeben (beispielsweise gespeichert) sein oder dieser von einer nicht näher dargestellten Einheit mittels eines Signals

$S_{LL}$ zugeführt werden. Diese Information kann selbstverständlich auch in gleicher Weise der Empfangseinrichtung 6, insbesondere der Empfangseinheit 7, zugeführt sein.

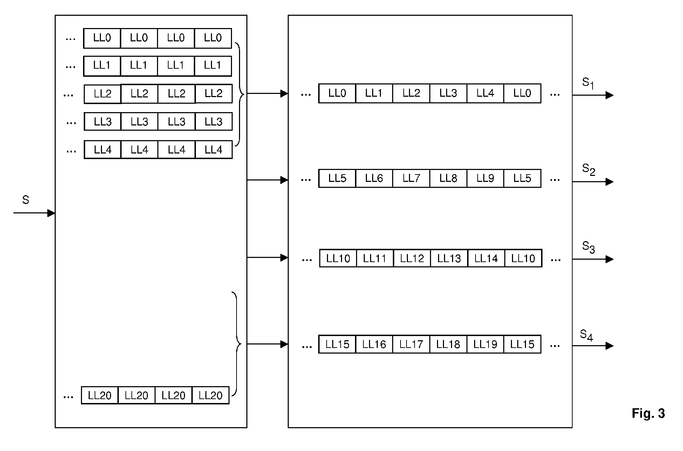

Fig. 3 zeigt schematisch die Zuordnung von Byte Blöcken (beispielsweise 16-Byte Blöcken) des digitalen Sendesignals S zu den 20 Logical Lanes eines OTU4 Services und die Zuordnung von im dargestellten Beispiel jeweils fünf LL zu jeweils einem Teilsignal $S_1$, $S_2$, $S_3$, $S_4$. Dabei sind die LL0 bis LL4 dem Teilsignal $S_{1[OB14]}$, die LL5 bis LL9 dem Teilsignal $S_2$, die LL10 bis LL14 dem Teilsignal $S_3$ und die LL15 bis LL19 dem Teilsignal $S_4$ zugeordnet. Im Teilsignal $S_1$, $S_2$, $S_3$, $S_4$ werden die Byte Blöcke der jeweils fünf Logical Lanes $_{[OB15]}$jeweils in der dargestellten, sich wiederholenden Reihenfolge übertragen.

Die Zuordnung der LL zu den Teilsignalen kann statisch sein oder ggf. auch dynamisch verändert werden.

In einer derartigen Struktur besteht die Möglichkeit, dass die Sendeeinrichtung 3 bestimmte Bytes eines Rahmens (deren Position vorzugsweise fest bleibt) mit einer auch empfangsseitig vorbekannten Bitstruktur beschreibt. Die Bitstruktur kann auch länger sein bzw. mehr Bytes umfassen als dies der Anzahl der bestimmten (vordefinierten) Bytes eines einzigen Rahmens entspricht.

Als Position für die Übertragung der vorbekannten Bitstruktur in einem Rahmen eines OTU4 Services eignen sich beispielsweise die Fixed Stuff (FS) Bytes 3817 bis 3824 jeder Zeile eines Rahmens (vgl. Fig. 2). Die FS Bytes werden für die standardisierte Übertragung im inversen Multiplex nicht zwingend benötigt und können daher frei belegt werden$_{[OB17]}$, auch wenn damit keine völlig standard-konforme Lösung mehr vorliegt (nach dem Standard dürfen diese Bytes streng genommen nicht anderweitig verwendet werden und sind nach einer festgelegten Vorgabe zu beschreiben).

Andere Positionen, wie z.B. die Verwendung von ODU OH Bytes (z.B. Bytes #1 ... #8 von Frame Zeile #3) sind ebenso möglich$_{[OB18]}$, wenn die dazugehörende Funktionalitäten nicht verwendet werden. Wird z.B. keine Vorwärtsfehlerkorrektur (FEC) verwendet, so kommen als alternative Positionen auch die für die FEC reservierten Bytes des Rahmens (Bytes mit den Nummern 3825 bis 4080 jeder Zeile) in Frage. Es muss in allen Fällen lediglich sicher gestellt sein, dass die verwendeten Bytes blockweise in die 16-Byte Blockstruktur der LL passen, um sie später wieder zuweisen zu können.

Werden die FS Bytes der Rahmen eines OTU4 Service für den Transport der vorbekannten Bitstruktur verwendet und wird die Länge der vorbekannten Bitstruktur im Fall der vorstehend erläuterten Multi-Framestruktur mit 240 Rahmen für einen OTU4 Service auf 384 Byte festgelegt, so wird diese Bitstruktur genau 20 mal innerhalb von 240 Rahmen übertragen. Denn die Länge der Bitstruktur beträgt in diesem Fall 12 mal 4 mal 8 gleich 384 Bytes (12 Rahmen, wobei in jeder der vier Zeilen eines Rahmens 8 FS Bytes zur Aufnahme der Bitstruktur zur Verfügung stehen).

Wird auch das vorstehend erläuterte rollierende System für die Zuordnung der 16 Byte Blöcke zu den LL verwendet, so ist die vorgegebene Bitstruktur genau einmal in jeder LL enthalten. Wird jedes Teilsignal $S_1$, $S_2$, $S_3$, $S_4$ aus derselben Anzahl von LL gebildet, so wird in derselben Zeiteinheit dieselbe Anzahl von (auch empfangsseitig) vorbekannten Bits über die einzelnen Übertragungsstrecken 5a, 5b, 5c, 5d übertragen, so dass bei einer empfangsseitigen Auswertung von Bitfehlern durch einen Vergleich der ggf. fehlerbehaftet übertragenen vorbekannten Bitstruktur innerhalb des digitalen Empfangssignals E mit der korrekten Bitstruktur die Bitfehlerwahrscheinlichkeit für die einzelnen Übertragungsstrecken jeweils mit derselben statistischen Sicherheit bzw. Zuverlässigkeit getroffen werden kann.

Selbst wenn die Anzahlen der in den Teilsignalen $S_1$, $S_2$, $S_3$, $S_4$ enthaltenen LL unterschiedlich sein sollte, ergibt sich bei diesem System der Vorteil, dass zumindest die gesamte vorbekannte Bitstruktur mindestens einmal in jedem Teilsignal enthalten ist, wodurch die Übertragungsqualität jede der Übertragungsstrecken 5a, 5b, 5c, 5d in gleicher Weise (d.h. mit derselben Bitstruktur) geprüft wird.

Bei der in Fig. 1 dargestellten Ausführungsform eines Systems 1 zur Übertragung eines digitalen Signals im inversen Multiplex werden die einzelnen Teilsignale $S_1$, $S_2$, $S_3$, $S_4$ am empfangsseitigen Ende der Übertragungsstrecken 5a, 5b, 5c, 5d wieder zu einem zunächst noch gescrambelten digitalen Empfangssignal $E_s$ zusammengefasst. Hierzu muss der Empfangseinrichtung 7 selbstverständlich bekannt sein, wie die Zuordnung der 16-Byte Blöcke der Rahmen des Sendesignals S zu den LL und die Zuordnung der LL zu den Teilsignalen $S_1$, $S_2$, $S_3$, $S_4$ erfolgt ist. Hiervon soll im Folgenden ausgegangen werden, wobei der hierfür nötige Synchronisierungs- oder Lernprozess, der in der Empfangseinheit 7 ablaufen kann, nicht dargestellt wird, da er für das Verständnis der vorliegenden Erfindung ohne Belang ist.

Das so erzeugte, noch gescrambelte Empfangssignal $E_s$ wird einem De-scrambler 9 zugeführt, der den Scrambling-Prozess, der in der Sendeeinrichtung 3 durchgeführt wurde, rückgängig macht und auf diese Weise das Empfangssignal E erzeugt. Auf das Empfangssignal E kann eine Vorwärtsfehlerkorrektur angewendet werden, wozu das Empfangssignal E einer dem De-scrambler nachgeschalteten Vorwärtsfehlerkorrektureinheit (FEC-Einheit) 11 zugeführt wird, welche ein fehlerkorrigiertes Signal $E_{cor}$ erzeugt.

Das Empfangssignal E wird gleichzeitig einer Detektoreinheit 13 zugeführt. Die Detektoreinheit 13 kennt ebenfalls die Byte-Positionen der Bytes innerhalb eines Rahmens des Empfangssignals E, in welchen die vorbekannte Bitstruktur enthalten ist und vergleicht die (entsprechenden relevanten Teile der) Bitstruktur mit der tatsächlich in den betreffenden Bytes des Empfangssignals enthaltenen (ggf. fehlerbehaftet übertragenen) Bitstruktur. Auf diese Weise kann die Detektoreinheit 13 fehlerhaft übertragene Bits feststellen und die Bitfehlerrate für die gesamte Übertragungsstrecke ermitteln.[TE21] [OB22]

Darüber hinaus kann die Detektoreinheit die Information, wie die 16-Byte Blöcke des Sendesignals S auf die LL aufgeteilt wurden und wie die Zuordnung der LL zu den Teilsignalen $S_1$, $S_2$, $S_3$, $S_4$ erfolgt ist dazu verwenden, um zu ermitteln über welche Übertragungsstrecke $S_1$, $S_2$, $S_3$, $S_4$ ein bestimmtes relevantes Byte übertragen wurde, in dem ein Teil der vorbekannten Bitstruktur enthalten ist.

Damit kann die Detektoreinheit 13 die detektierten Bitfehlerraten auch jeweils dem Teilsignal $S_1$, $S_2$, $S_3$, $S_4$ zuordnen, bzw. der betreffenden Übertragungsstrecke, und hierfür eine Bitfehlerrate ermitteln.

Das Zuordnen der Byte-Position zu den LL kann beispielsweise dadurch erfolgen, dass jeweils das erste Byte bzw. Bit eines Rahmens ermittelt wird und aus der dann feststehenden Nummer des Bytes innerhalb der betreffenden Zeile des Rahmens auf die zugehörige LL rückgerechnet wird. Hierzu muss der Detektoreinheit selbstverständlich bekannt sein (zumindest implizit), wie das Aufteilen des Sendesignals in die LL bzw. die Zuordnung der LL zu den Teilsignalen $S_1$, $S_2$, $S_3$, $S_4$ innerhalb der Sendeeinrichtung 3 erfolgt.

Für das vorstehende Beispiel des Verwendens des 8-Byte Blocks der FS Bytes jeder Zeile eines Rahmens eines OTU4 Services ergibt sich folgende Vorschrift für das Zuordnen der 8-Byte Blöcke der 1 bis 4 Zeile eines Rahmens zu den betreffenden LL:

$$LL\# = ([LLM \text{ modulo } 20] + X) \text{ modulo } 20$$

mit X = 18 für den 8-Byte Block der ersten Zeile des Rahmens

X = 13 für den 8-Byte Block der zweiten Zeile des Rahmens

X = 8 für den 8-Byte Block der dritten Zeile des Rahmens

X = 3 für den 8-Byte Block der vierten Zeile des Rahmens

wobei mit LL# die LL der Nummer # bezeichnet ist und mit X ein konstanter ganzzahliger Wert, abhängig von der Zeile des 8-Byte Blocks der FS Bytes. Auf diese Weise kann die Detektoreinheit 13 aus den ihr bekannten Positionen der FS Bytes bzw. des Blocks von 8 FS Bytes die zugehörige LL ermitteln und einen detektierten Bitfehler der betreffenden LL und damit der zugehörigen Übertragungsstrecke zuordnen. Damit kann die Detektoreinheit bereits die Bitfehlerrate (die Anzahl der fehlerhaft übertragenen Bits pro Zeiteinheit) spezifisch für jede Übertragungsstrecke ermitteln.[OB23]

Selbstverständlich kann auch für jede andere vorbekannte Position eines oder mehrerer Blöcke von Bytes zur Aufnahme einer vorbekannten Bitstruktur eine entsprechende Beziehung angegeben werden, die es ermöglicht, in welche LL ein Byte einer bestimmten Position einer speziellen Zeile des Rahmens fällt. Eine entsprechende Berechnungsvorschrift kann der Detektoreinheit von einer nicht näher dargestellten Einheit über das Signal $S_{ci}$ zugeführt werden.

Die Detektoreinheit 13 kann auch die spezifischen Bitfehlerraten für fehlerhaft übertragenen "0" Bits und "1" Bits ermitteln (pro Übertragungsstrecke). Zu diesem Zweck kann der Detektoreinheit 13 auch noch das gescrambelte Empfangssignal $E_S$ zugeführt sein. Damit kann die Detektoreinheit 13 ermitteln, ob im gescrambelten Signal $E_s$ am festgestellten Ort eines Bitfehlers das betreffende (fehlerhaft übertragene) Bit den Wert logisch "0" oder logisch "1" aufweist. Zusätzlich kann die Detektoreinheit 13 auch Informationen über die Art eines Bitfehlers ermitteln, beispielsweise innerhalb welcher Bitstruktur (d.h. einer bestimmten Anzahl von links und rechts von der Bitfehlerposition übertragenen Bits) das fehlerhaft übertragene Bit liegt. Hieraus können ggf. Rückschlüsse auf die Fehlerursachen gezogen werden.

Da das digitale Sendesignal S und damit auch die Teilsignale $S_1$, $S_2$, $S_3$, $S_4$ bei der in Fig. 1 dargestellten Ausführungsform eines Übertragungssystems 1 gescrambelt werden, muss die Detektoreinheit 13 zur Feststellung der Art eines Bitfehlers ermitteln, ob ein Bitwert "0" auf einer Übertragungsstrecke 5a, 5b, 5c, 5d in einen Bitwert "1" verfälscht wurde oder umgekehrt. Hierzu ist der Detektoreinheit 13 das noch gescrambelte Empfangssignal $E_S$ zugeführt, so dass die Detektoreinheit nach der Ermittlung der Bitposition eines Bitfehlers detektieren kann, ob dieses Bit im gescrambelten Empfangssignal $E_S$ als "0" oder "1" Bit enthalten ist. Abhängig davon kann dann der Bitfehler der spezifischen Bitfehlerrate für "0" bzw. für "1" zugerechnet werden (d.h., es kann so die Wahrscheinlichkeit, dass ein "0" Bit fälschlicherweise als "1" Bit übertragen bzw. detektiert wird oder dass ein "1" Bit fälschlicherweise als "0" Bit übertragen bzw. detektiert wird, ermittelt werden).

Die Detektoreinheit 13 kann auch die Häufigkeit des Auftretens bestimmter Bitfehler innerhalb einer bestimmten Bitstruktur (einer bestimmten Anzahl von links und rechts von der Bitfehlerposition übertragenen Bits) feststellen.

Beispielsweise lassen sich bei optischen Übertragungstrecken bestimmte spezifische Bitfehler(häufigkeiten) auf bestimmte Fehlermechanismen zurückführen, beispielsweise auf eine unterkompensierte oder überkompensierte Dispersion der Strecke. Die jeweils spezifische Bitfehlerhäufigkeit kann dann dazu genutzt werden, um einen variablen, ansteuerbaren Dispersionskompensator abhängig von der betreffenden spezifischen Bitfehlerrate zu steuern oder so zu regeln, dass die spezifische Bitfehlerrate minimal wird oder einen vorgegebenen Grenzwert unterschreitet.

Im einfachsten Fall können die einer der Übertragungsstrecken 5a, 5b, 5c, 5d zugeordneten spezifischen Bitfehlerraten dazu genutzt werden, um die in der Empfangseinheit 7 enthaltenen Empfänger-Interfaces 15a, 15b, 15c, 15d, welche das jeweils zugeführte Teilsignal $S_1$, $S_2$, $S_3$, $S_4$ empfangen, hinsichtlich ihrer Entscheiderschwelle zur Unterscheidung der Bitwerte logisch "0" von logisch "1" so anzusteuern, dass die betreffende spezifische Bitfehlerrate minimal wird oder einen vorgegebenen Grenzwert unterschreitet. Dies ist in Fig. 1 durch das Ansteuersignal $S_c$ dargestellt, welches der Empfangseinheit 7 von der Detektoreinheit 13 zugeführt ist.

Durch das Bestimmen von spezifischen Parametern, die die Performance oder Übertragungsqualität der einzelnen Übertragungsstrecken (ggf. einschließlich der Empfänger-Interfaces 15a, 15b, 15c, 15d) kennzeichnen, kann somit die Performance bzw. Übertragungsqualität der gesamten Übertragungsstrecke (bestehend aus mehreren parallelen Übertragungsstrecken) bewertet oder optimiert werden.

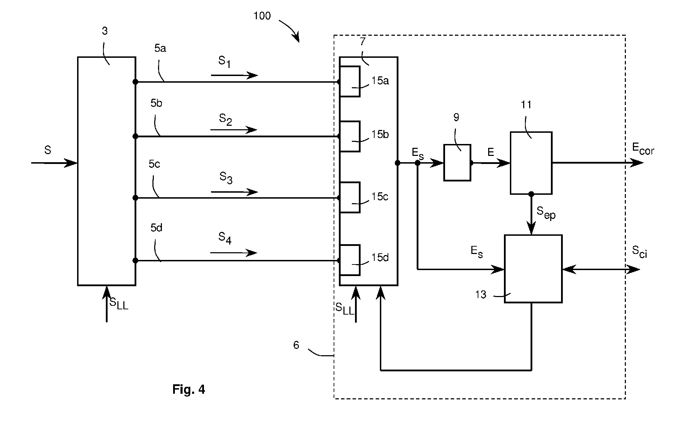

Die in Fig. 4 dargestellte weitere Ausführungsform eines Systems 100 zur Übertragung eines digitalen Signals im inversen Multiplex ähnelt in seiner Struktur der Ausführungsform nach Fig.1. Gleiche Funktionseinheiten und Signale sind daher mit denselben Bezugszeichen versehen. Das System 100 unterscheidet sich von dem System 1 nach Fig. 1 dadurch, dass zur Ermittlung von wenigstens einem Parameter, der die Übertragungsqualität der jedem Teilsignal zugeordneten Übertragungsstrecken kennzeichnet und/oder Rückschlüsse zulässt, durch welche Fehlermechanismen der betreffenden Übertragungsstrecke deren Übertragungsqualität beeinträchtigt wird, keine vorbekannte [OB24]Bitstruktur mehr verwendet wird, die sendeseitig in das digitale Sendesignal S geschrieben wird. Stattdessen wird das Detektieren von Bitfehlern an praktisch beliebigen Positionen innerhalb des digitalen, ggf. mittels des Descramblers 9 de-scrambelten Empfangssignals (zumindest im Bereich der Payload) mittels einer FEC-Einheit 11 durchgeführt. Die FEC-Einheit 11 ermittelt zumindest die Byte-Positionen der Bitfehler im digitalen Empfangssignal E und übermittelt diese Information an die Detektoreinheit 13 (dargestellt in Fig. 4 durch das Signal $S_{ep}$). Beispielsweise kann die FEC-Einheit hierzu die Nummer des Bytes und die Nummer der Zeile innerhalb des betreffenden Rahmens des Empfangssignals E an die Detektoreinheit 13 übermitteln. Diese kann dann in der vorstehend, in Verbindung mit Fig. 1 erläuterten Weise aus der Byte-Position innerhalb eines Rahmens auf die zugehörige LL und [OB25]d[TE26]amit auf die zugehörige Übertragungsstrecke 5a, 5b, 5c, 5d zurückrechnen. Hierdurch kann bereits die Bitfehlerrate für jede Übertragungsstrecke 5a, 5b, 5c, 5d ermittelt werden.

Wie vorstehend erläutert, können jedoch selbstverständlich auch bei dieser Ausführungsform auf gleiche Weise die spezifischen Bitfehlerraten oder andere Informationen über die Art des Bitfehlers ermittelt werden. Hierzu muss dann selbstverständlich nicht nur die Byte-Position eines Bitfehlers ermittelt werden, sondern auch weitere Parameter, wie die Bitstruktur die den Bitfehler umgibt und ob es sich bei dem fehlerhaft empfangenen (bzw. durch Rückschluss: bei dem betreffenden gesendeten) Bit um ein "0" oder ein "1" Bit handelt.

Wird das Sendesignal gescrambelt über die Übertragungsstrecken 5a, 5b, 5c, 5d übertragen, so kann der Detektoreinheit 13 wiederum das noch gescrambelte Empfangssignal $E_s$ zugeführt werden, wie in Fig. 4 dargestellt. Die Detektoreinheit 13 kann dann anhand des Signals $E_s$ unter Verwendung der bekannten Position des Fehlers im Signal $E_s$ feststellen[OB27], ob es dich bei dem fehlerhaft empfangenen (bzw. durch Rückschluss: bei dem betreffenden gesendeten) Bit um ein "0" oder ein "1" Bit handelt bzw. von welchen Bits das fehlerhafte Bit (auf der betreffenden Übertragungsstrecke 5a, 5b, 5c, 5d) benachbart war.

Die so ermittelten Informationen können dann wie vorstehend in Verbindung mit der Ausführungsform nach Fig. 1 erläutert, zur Bewertung bzw. Überprüfung der Performance der gesamten Übertragungsstrecke oder der einzelnen Übertragungsstrecken 5a, 5b, 5c, 5d verwendet werden bzw. zur Ansteuerung von Einheiten, insbesondere der Interfaces 15a, 15b, 15c, 15d der Empfangseinheit 7.

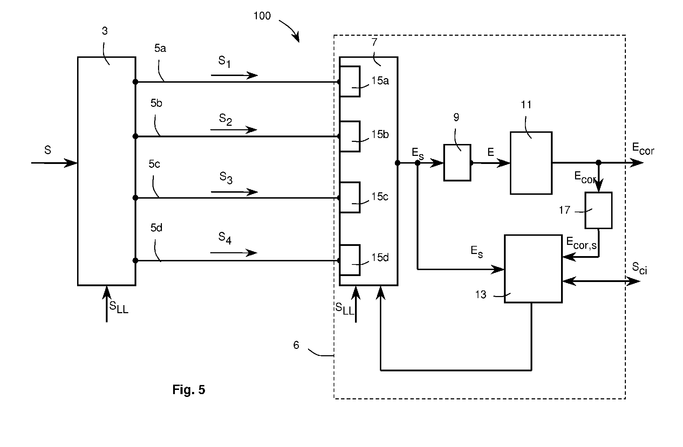

Fig. 5 zeigt eine Variante der Ausführungsform eines Übertragungssystems 100 nach Fig. 4, bei der der die FEC-Einheit der Detektoreinheit die Byte-Postition (oder die Bit-Position) eines fehlerhaften Bits nicht mehr zuführen muss. Dies kann zwar noch geschehen, ist aber bei dieser Lösung nicht mehr zwingend erforderlich.

Denn der Detektoreinheit 13 ist hier das mittels eines Scramblers 17 erneut gescrambelte[OB28], zuvor bereits fehlerkorrigierte Empfangssignal $E_{cor,s}$ zugeführt, wobei das Scrambeln in identischer Weise erfolgt, wie zum Zweck der Übertragung des digitalen Sendesignals S. Damit kann die Detektoreinheit 13 das gescrambelte, fehlerkorrigierte Empfangssignal $E_{cor.s}$ (welches mit hoher Sicherheit mit dem gescrambelten Sendesignal identisch ist, zumindest wenn keine unkorrigierbaren Fehler auftreten[OB29])[TE30] mit dem gescrambelten, unkorrigierten Empfangssignal $E_s$ vergleichen. Hieraus kann die Byte- oder sogar die Bitposition eines fehlerhaft übertragenen Bits ermittelt und in gleicher Weise, wie vorstehend beschrieben auf die LL rückgerechnet und der betreffenden Übertragungsstrecke 5a, 5b, 5c, 5d zugeordnet werden.

Abschließend sei darauf hingewiesen, dass die in den Fig. 1, 4 und 5 dargestellten Einheiten, insbesondere die Einheiten, die Bestandteil der Empfangseinrichtung 6 sind, nicht als eigenständige Einheiten ausgeführt sein müssen, sondern die betreffende Funktionalität in einer oder mehreren physikalischen Einheiten, durch Hard- oder Software, realisiert sein kann.

## Patentansprüche

1. Verfahren zur Übertragung eines digitalen Signals im inversen Multiplex, insbesondere über ein Optical Transport Network,

(a) bei dem ein zu übertragendes digitales Sendesignal (S) in eine bestimmte Anzahl M von mehreren Teilsignalen (S$_1$, S$_2$, S$_3$, S$_4$) aufgeteilt wird, wobei jedes Teilsignal (S$_1$, S$_2$, S$_3$, S$_4$) einer Sendeseite einer ausschließlich diesem Teilsignal (S$_1$, S$_2$, S$_3$, S$_4$) zugeordneten Übertragungsstrecke (5a, 5b, 5c, 5d) zugeführt wird und an eine Empfangsseite der zugeordneten Übertragungsstrecke (5a, 5b, 5c, 5d) übertragen wird, und

(b) bei dem an den Empfangsseiten der Übertragungsstrecken (5a, 5b, 5c, 5d) die Teilsignale (S$_1$, S$_2$, S$_3$, S$_4$) wieder zu einem digitalen Empfangssignal (E) zusammengesetzt werden, **dadurch gekennzeichnet,**

(c) **dass** auf der Empfangsseite Bitfehler im digitalen Empfangssignal (E) einschließlich deren Position im digitalen Empfangssignal (E) detektiert werden,

(d) **dass** aus der detektierten Position der Bitfehler und aus der auf der Empfangsseite ebenfalls bekannten Zuordnung der einzelnen Bytes des digitalen Empfangssignals (E) zu den jeweiligen Teilsignalen (S$_1$, S$_2$, S$_3$, S$_4$) und Übertragungsstrecken (5a, 5b, 5c, 5d) ermittelt wird, welchem Teilsignal (S$_1$, S$_2$, S$_3$, S$_4$) die detektierten Bitfehler zugeordnet waren, und

(e) **dass** hieraus ein oder mehrere Parameter ermittelt werden, welche die Übertragungsqualität der jedem Teilsignal (S$_1$, S$_2$, S$_3$, S$_4$) zugeordneten Übertragungsstrecke (5a, 5b, 5c, 5d) kennzeichnen und/oder Rückschlüsse zulassen, durch welche Fehlermechanismen der betreffenden Übertragungsstrecke (5a, 5b, 5c, 5d) deren Übertragungsqualität beeinträchtigt wird.

2. Verfahren nach Anspruch 1, **dadurch gekennzeichnet, dass** das Sendesignal (S) eine Rahmenstruktur aufweist.

3. Verfahren nach Anspruch 1 oder 2, **dadurch gekennzeichnet, dass** das Sendesignal (S) in mehrere Logical Lanes (LL0 bis LL20) aufgeteilt wird, welche jeweils eine bestimmte Anzahl von Bytes des digitalen Sendesignals (S) beinhalten, und wobei jeweils eine oder mehrere Logical Lanes (LL0 bis LL20) zu einem Teilsignal (S$_1$, S$_2$, S$_3$, S$_4$) der Anzahl M von mehreren Teilsignalen (S$_1$, S$_2$, S$_3$, S$_4$) zusammengefasst wird, wobei die Zuordnung der Bytes des Sendesignals (S) zu den Logical Lanes (LL0 bis LL20) und die Zuordnung der Logical Lanes (LL0 bis LL20) zu den Teilsignalen (S$_1$, S$_2$, S$_3$, S$_4$) auch auf der Empfangsseite bekannt ist.

4. Verfahren nach einem der vorhergehenden Ansprüche, **dadurch gekennzeichnet, dass** für ausgewählte oder alle Übertragungsstrecken (5a, 5b, 5c, 5d) als Parameter die Bitfehlerrate oder durch das Detektieren, ob das fehlerhaft übertragene Bit ein logisch "0" Bit oder ein logisch "1" Bit war, die spezifischen Bitfehlerraten für die Bitwerte logisch "0" und logisch "1" ermittelt werden.

5. Verfahren nach einem der vorhergehenden Ansprüche, **dadurch gekennzeichnet, dass** abhängig von den ermittelten Parametern Parameter der Übertragungsstrecke (5a, 5b, 5c, 5d) so geregelt werden, dass sich eine optimale Übertragungsqualität für das zu übertragende digitale Signal ergibt.

6. Verfahren nach einem der vorhergehenden Ansprüche, **dadurch gekennzeichnet,**

(a) **dass** in einem oder mehreren vorgegebenen Blöcken von Bytes des digitalen Sendesignals (S) eine vorbekannte Bitstruktur geschrieben wird,

(b) **dass** auf der Empfangsseite die vorbekannte Bitstruktur in den entsprechenden, auch auf der Empfangsseite bekannten, vorgegebenen Blöcken von Bytes des digitalen Empfangssignals (E) erfasst und mögliche Bitfehler in der vorbekannten Bitstruktur detektiert werden und

(c) **dass** aus der Position des Bitfehlers im Empfangssignal (E) ermittelt wird, welchem Teilsignal (S$_1$, S$_2$, S$_3$, S$_4$) die detektierten Bitfehler zuzuordnen sind.

7. Verfahren nach Anspruch 2 und 6, **dadurch gekennzeichnet, dass** die Länge der vorbekannten Bitstruktur so gewählt ist, dass die Bitstruktur auf die vorgegebenen Blöcke von Bytes mehrerer Rahmen verteilt übertragen wird.

8. Verfahren nach Anspruch 7, **dadurch gekennzeichnet, dass** der Anfang der vorbekannten Bitstruktur auf das erste vorgegebene Byte eines Rahmens gelegt wird, wobei dieser Rahmen eine vorbestimmte empfangsseitig bekannte Markierung aufweist.

9. Verfahren nach Anspruch 3 und einem der Ansprüche 6 bis 8, **dadurch gekennzeichnet, dass** die Positionen der vorgegebenen Blöcke von Bytes innerhalb des Sendesignals (S) so gewählt sind, dass die Bytes der vorbekannten Bitstruktur im Wesentlichen gleichmäßig auf die Logical Lanes (LL0 bis LL20) oder im Wesentlichen gleichmäßig auf die Teilsignale (S$_1$, S$_2$, S$_3$, S$_4$) verteilt werden.

10. Verfahren nach Anspruch 2 und 3 und einem der Ansprüche 6 bis 9, **dadurch gekennzeichnet, dass** die Position des einen oder der mehreren vorgegebenen Blöcke von Bytes innerhalb jedes Rahmens konstant bleibt und dass die Zuordnung der Bytes oder Blöcken von Bytes zu den Logical Lanes (LL0 bis LL20) nach einem rollierenden System erfolgt.

11. Verfahren nach Anspruch 10, **dadurch gekennzeichnet, dass** die vorbekannte Bitstruktur zumindest entsprechend der Anzahl N von Logical Lanes (LL0 bis LL20) mal hintereinander übertragen wird und dass das rollierende System und die Position des einen oder der mehreren vorgegebenen Blöcke von Bytes innerhalb jedes Rahmens so gewählt und aufeinander abgestimmt sind, dass nach einer N maligen Übertragung der vorbekannten Bitstruktur die vollständige Bitstruktur jeweils einmal innerhalb jeder Logical Lane (LL0 bis LL20) enthalten ist.

12. Verfahren nach einem der Ansprüche 3 oder 4 bis 11, insoweit diese auch auf Anspruch 3 rückbezogen sind, **dadurch gekennzeichnet, dass**

   (a) das zu übertragende digitale Sendesignal (S) eine Redundanz zur Ermöglichung einer Vorwärtsfehlerkorrektur beinhaltet,
   (b) dass auf der Empfangsseite auf das digitale Empfangssignal (E) eine Vorwärtsfehlerkorrektur angewendet wird,
   (c) dass mittels der Vorwärtsfehlerkorrektur oder durch den Vergleich des unkorrigierten mit dem fehlerkorrigierten Signal die Bit-Position oder zumindest die Byte-Position jedes korrigierbaren Bitfehlers innerhalb des betreffenden Rahmens des Empfangssignals (E) ermittelt wird,
   (d) dass aus der Position des Bitfehlers im Empfangssignal (E) ermittelt wird, welcher Logical Lane (LL0 bis LL20) oder welchem Teilsignal ($S_1$, $S_2$, $S_3$, $S_4$) die detektierten Bitfehler zuzuordnen sind.

13. Verfahren nach einem der vorhergehenden Ansprüche, **dadurch gekennzeichnet, dass** das digitale Sendesignal (S) vor der Aufteilung in die Teilsignale ($S_1$, $S_2$, $S_3$, $S_4$) gescrambelt wird und dass empfangsseitig das digitale Empfangssignal (E) descrambelt wird.

14. Verfahren nach Anspruch 13, **dadurch gekennzeichnet, dass** empfangsseitig das digitale Empfangssignal (E) de-scrambelt wird, bevor eine Vorwärtsfehlerkorrektur erfolgt.

15. Verfahren nach Anspruch 13 oder 14, **dadurch gekennzeichnet, dass** zusätzlich zur Detektion eines Bitfehlers im noch gescrambelten digitalen Empfangssignal (E) ermittelt wird, ob an der Position des fehlerhaft übertragenen Bits der Bitwert gleich logisch "0" oder logisch "1" ist und dass hieraus spezifische Bitfehlerraten für die Bitwerte logisch "0" und/oder logisch "1" für ausgewählte oder alle Übertragungsstrecken (5a, 5b, 5c, 5d) ermittelt werden.

16. Verfahren nach Anspruch 13 oder 14, **dadurch gekennzeichnet, dass** das noch gescrambelte Empfangssignal (E) und das de-scrambelte, jedoch erneut identisch gescrambelte fehlerkorrigierte Empfangssignal (E) verglichen werden und dass durch diesen Vergleich sowohl die Bitposition fehlerhaft übertragener Bits ermittelt wird als auch die Information, ob das fehlerhaft übertragene Bit im gescrambelten digitalen Sendesignal (S) ursprünglich ein logisch "0" Bit oder ein logisch "1" Bit war bzw. ob das fehlerhaft übertragene Bit im gescrambelten digitalen Empfangssignal (E) logisch "0" Bit oder ein logisch "1" Bit ist.

17. Verfahren nach Anspruch 16, **dadurch gekennzeichnet, dass** durch den Vergleich des noch gescrambelten Empfangssignals (E) und des descrambelten, jedoch erneut identisch gescrambelten fehlerkorrigierten Empfangssignals (E) auch die Bit-Positionen oder Byte-Positionen der korrigierbaren Fehler ermittelt werden.

18. Empfangseinrichtung für ein System zur Übertragung eines digitalen Signals im inversen Multiplex, insbesondere über ein Optical Transport Network,

   (a) bei dem eine Sendeeinrichtung (3) ein zu übertragendes digitales Sendesignal (S), welches eine Rahmenstruktur aufweist, in mehrere Logical Lanes (LL0 bis LL20) aufteilt, welche jeweils eine bestimmte Anzahl von Bytes des digitalen Sendesignals (S) beinhalten,
   (b) bei dem die Sendeeinrichtung (3) das zu übertragende digitale Sendesignal (S) in mehrere Teilsignale ($S_1$, $S_2$, $S_3$, $S_4$) aufteilt und jeweils jedes Teilsignal ($S_1$, $S_2$, $S_3$, $S_4$) einer Sendeseite einer ausschließlich diesem Teilsignal ($S_1$, $S_2$, $S_3$, $S_4$) zugeordneten Übertragungsstrecke (5a, 5b, 5c, 5d) zuführt, und
   (c) bei dem die Empfangseinrichtung (6) die zu einer Empfangsseite der mehreren Übertragungsstrecken (5a, 5b, 5c, 5d) übertragenen Teilsignale ($S_1$, $S_2$, $S_3$, $S_4$) wieder zu einem digitalen Empfangssignal (E) zusammensetzt, **dadurch gekennzeichnet,**
   (d) **dass** die Empfangseinrichtung (6) so ausgebildet ist,

      (i) **dass** im digitalen Empfangssignal (E)

         (1) eine vorbekannte Bitstruktur, die von der Sendeeinrichtung (3) in einen oder mehrere vorgegebene Blöcke von Bytes des digitalen Sendesignals (S) geschrieben wurde, erfasst und Bitfehler unter Erfassung des Orts im digitalen Empfangssignal (E) detektiert werden, oder

(2) eine Vorwärtsfehlerkorrektur auf das digitale Empfangssignal (E) angewendet wird, welches eine Redundanz zur Ermöglichung einer Vorwärtsfehlerkorrektur enthält, wobei durch die Vorwärtsfehlerkorrektur oder den Vergleich des korrigierten digitalen Empfangssignals (E) mit dem unkorrigierten digitalen Empfangssignal (E) Bitfehler unter Erfassung des Orts im digitalen Empfangssignal (E) detektiert werden,

(ii) **dass** aus dem ermittelten Ort der Bitfehler im digitalen Empfangssignal (E) und aus der der Empfangseinrichtung (6) bekannten Zuordnung der einzelnen Bytes des digitalen Empfangssignals (E) zu den jeweiligen Teilsignalen ($S_1$, $S_2$, $S_3$, $S_4$) und Übertragungsstrecken (5a, 5b, 5c, 5d) ermittelt wird, welchem Teilsignal ($S_1$, $S_2$, $S_3$, $S_4$) die detektierten Bitfehler zuzuordnen sind, und

(iii) **dass** hieraus ein oder mehrere Parameter ermittelt werden, welche die Übertragungsqualität der jedem Teilsignal ($S_1$, $S_2$, $S_3$, $S_4$) zugeordneten Übertragungsstrecke (5a, 5b, 5c, 5d) kennzeichnen und/oder Rückschlüsse zulassen, durch welche Fehlermechanismen der betreffenden Übertragungsstrecke (5a, 5b, 5c, 5d) deren Übertragungsqualität beeinträchtigt wird.

**Claims**

1. A method for transmitting a digital signal in inverse multiplexing, in particular by way of an optical transport network,

(a) in which a digital transmit signal (S) that is to be transmitted is divided into a certain number M of a plurality of sub-signals ($S_1$, $S_2$, $S_3$, $S_4$), wherein each sub-signal ($S_1$, $S_2$, $S_3$, $S_4$) is fed to a transmit side of a transmission section (5a, 5b, 5c, 5d) exclusively associated with this sub-signal ($S_1$, $S_2$, $S_3$, $S_4$) and is transmitted to a receive side of the associated transmission section (5a, 5b, 5c, 5d), and
(b) in which at the receive sides of the transmission sections (5a, 5b, 5c, 5d) the sub-signals ($S_1$, $S_2$, $S_3$, $S_4$) are reassembled to form a digital receive signal (E),
**characterised in that**
(c) bit errors in the digital receive signal (E) including their position in the digital receive signal (E) are detected on the receive side,

(d) from the detected position of the bit errors and from the association, likewise known on the receive side, of the individual bytes of the digital receive signal (E) with the respective sub-signals ($S_1$, $S_2$, $S_3$, $S_4$) and transmission sections (5a, 5b, 5c, 5d) it is determined with which sub-signal ($S_1$, $S_2$, $S_3$, $S_4$) the detected bit errors were associated, and
(e) from this, one or a plurality of parameters is/are determined that characterise the transmission quality of the transmission section (5a, 5b, 5c, 5d) associated with each sub-signal ($S_1$, $S_2$, $S_3$, $S_4$) and/or permit conclusions to be drawn about which error mechanisms of the relevant transmission section (5a, 5b, 5c, 5d) impair its transmission quality.

2. A method according to claim 1, **characterised in that** the transmit signal (S) has a frame structure.

3. A method according to claim 1 or 2, **characterised in that** the transmit signal (S) is divided into a plurality of logical lanes (LL0 to LL20), which each contain a certain number of bytes of the digital transmit signal (S), and wherein in each case one or a plurality of logical lanes (LL0 to LL20) is/are assembled to form a sub-signal ($S_1$, $S_2$, $S_3$, $S_4$) of the number M of the plurality of sub-signals ($S_1$, $S_2$, $S_3$, $S_4$), wherein the association of the bytes of the transmit signal (S) with the logical lanes (LL0 to LL20) and the association of the logical lanes (LL0 to LL20) with the sub-signals ($S_1$, $S_2$, $S_3$, $S_4$) is also known on the receive side.

4. A method according to one of the preceding claims, **characterised in that** for selected or all the transmission sections (5a, 5b, 5c, 5d) as parameters the bit error rate or, as a result of detection whether the incorrectly transmitted bit was a logical "0" bit or a logical "1" bit, the specific bit error rates for the bit values logical "0" and logical "1" is/are determined.

5. A method according to one of the preceding claims, **characterised in that** as a function of the parameters that are determined parameters of the transmission section (5a, 5b, 5c, 5d) are regulated in such a way that an optimum transmission quality for the digital signal that is to be transmitted results.

6. A method according to one of the preceding claims, **characterised in that**

(a) a previously known bit structure is written in one or a plurality of prespecified blocks of bytes of the digital transmit signal (S),
(b) on the receive side the previously known bit structure is acquired in the corresponding prespecified blocks of bytes of the digital receive signal (E) that are also known on the receive side, and possible bit errors in the previously known bit structure are detected, and
(c) from the position of the bit error in the receive signal (E) it is determined with which sub-signal ($S_1$, $S_2$, $S_3$, $S_4$) the detected bit errors are to be associated.

7. A method according to claim 2 and 6, **characterised in that** the length of the previously known bit structure is chosen in such a way that the bit structure is transmitted so that it is distributed over the prespecified blocks of bytes of a plurality of frames.

8. A method according to claim 7, **characterised in that** the beginning of the previously known bit structure is placed on the first prespecified byte of a frame, wherein this frame has a predetermined marker which is known on the receive side.

9. A method according to claim 3 and one of claims 6 to 8, **characterised in that** the positions of the prespecified blocks of bytes within the transmit signal (S) are chosen in such a way that the bytes of the previously known bit structure are distributed substantially uniformly over the logical lanes (LL0 to LL20) or substantially uniformly over the sub-signals ($S_1$, $S_2$, $S_3$, $S_4$).

10. A method according to claim 2 and 3 and one of claims 6 to 9, **characterised in that** the position of the one or the plurality of prespecified blocks of bytes within each frame remains constant, and the association of the bytes or blocks of bytes with the logical lanes (LL0 to LL20) is effected according to a rolling system.

11. A method according to claim 10, **characterised in that** the previously known bit structure is transmitted successively a number of times at least in accordance with the number N of logical lanes (LL0 to LL20), and the rolling system and the position of the one or the plurality of prespecified blocks of bytes within each frame is chosen and matched to each other in such a way that after the previously known bit structure has been transmitted N times the complete bit structure is in each case contained once within each logical lane (LL0 to LL20).

12. A method according to one of claims 3 or 4 to 11, in so far as they also relate to claim 3, **characterised in that**

    (a) the digital transmit signal (S) that is to be transmitted contains redundancy to make a forward error correction possible,
    (b) on the receive side a forward error correction is applied to the digital receive signal (E),

(c) by means of the forward error correction or by means of the comparison of the uncorrected signal with the error-corrected signal the bit position or at least the byte position of each correctable bit error is determined within the relevant frame of the receive signal (E),
(d) from the position of the bit error in the receive signal (E) it is determined with which logical lane (LL0 to LL20) or which sub-signal ($S_1$, $S_2$, $S_3$, $S_4$) the detected bit errors are to be associated.

13. A method according to one of the preceding claims, **characterised in that** the digital transmit signal (S) is scrambled before the division into the sub-signals ($S_1$, $S_2$, $S_3$, $S_4$), and the digital receive signal (E) is descrambled on the receive side.

14. A method according to claim 13, **characterised in that** the digital receive signal (E) is descrambled on the receive side before a forward error correction is effected.

15. A method according to claim 13 or 14, **characterised in that** in addition to the detection of a bit error in the still scrambled digital receive signal (E) it is determined whether the bit value is equal to logical "0" or logical "1" at the position of the incorrectly transmitted bit, and from this specific bit error rates for the bit values logical "0" and/or logical "1" are determined for selected or all the transmission sections (5a, 5b, 5c, 5d).

16. A method according to claim 13 or 14, **characterised in that** the still scrambled receive signal (E) and the descrambled, yet once again identically scrambled error-corrected receive signal (E) are compared, and by means of this comparison not only is the bit position of incorrectly transmitted bits determined, but so too is the information as to whether the incorrectly transmitted bit in the scrambled digital transmit signal (S) was originally a logical "0" bit or a logical "1" bit or whether the incorrectly transmitted bit in the scrambled digital receive signal (E) is a logical "0" bit or a logical "1" bit.

17. A method according to claim 16, **characterised in that** by means of the comparison of the still scrambled receive signal (E) and the descrambled, yet once again identically scrambled error-corrected receive signal (E) the bit positions or byte positions of the correctable errors are also determined.

18. A receive device for a system for transmitting a digital signal in inverse multiplexing, in particular by way of an optical transport network,

    (a) in which a transmit device (3) divides a digital transmit signal (S), which is to be transmitted and has a frame structure, into a plurality of logical lanes (LL0 to LL20) which each contain a certain number of bytes of the digital transmit signal (S),

(b) in which the transmit device (3) divides the digital transmit signal (S) that is to be transmitted into a plurality of sub-signals ($S_1$, $S_2$, $S_3$, $S_4$) and in each case feeds each sub-signal ($S_1$, $S_2$, $S_3$, $S_4$) to a transmit side of a transmission section (5a, 5b, 5c, 5d) exclusively associated with this sub-signal ($S_1$, $S_2$, $S_3$, $S_4$), and

(c) in which the receive device (6) reassembles the sub-signals ($S_1$, $S_2$, $S_3$, $S_4$), transmitted to a receive side of the plurality of transmission sections (5a, 5b, 5c, 5d), to form a digital receive signal (E),

**characterised in that**

(d) the receive device (6) is configured in such a way that

(i) in the digital receive signal (E)

(1) a previously known bit structure which was written into one or a plurality of prespecified blocks of bytes of the digital transmit signal (S) by the transmit device (3) is acquired, and bit errors are detected with acquisition of the location in the digital receive signal (E), or

(2) a forward error correction is applied to the digital receive signal (E) which contains redundancy to make a forward error correction possible, wherein by means of the forward error correction or the comparison of the corrected digital receive signal (E) with the uncorrected digital receive signal (E) bit errors are detected with acquisition of the location in the digital receive signal (E),

(ii) from the determined location of the bit errors in the digital receive signal (E) and from the association, known to the receive device (6), of the individual bytes of the digital receive signal (E) with the respective sub-signals ($S_1$, $S_2$, $S_3$, $S_4$) and transmission sections (5a, 5b, 5c, 5d) it is determined with which sub-signal ($S_1$, $S_2$, $S_3$, $S_4$) the detected bit errors are to be associated, and

(iii) from this, one or a plurality of parameters is/are determined that characterise the transmission quality of the transmission section (5a, 5b, 5c, 5d) associated with each sub-signal ($S_1$, $S_2$, $S_3$, $S_4$) and/or permit conclusions to be drawn about which error mechanisms of the relevant transmission section (5a, 5b, 5c, 5d) impair its transmission quality.

**Revendications**

1. Procédé de transmission d'un signal numérique en multiplexe inverse, plus particulièrement par l'intermédiaire d'un réseau de transport optique,

(a) dans lequel un signal d'émission numérique (S) à transmettre est divisé en un nombre déterminé M de plusieurs signaux partiels ($S_1$, $S_2$, $S_3$, $S_4$), chaque signal partiel ($S_1$, $S_2$, $S_3$, $S_4$) d'un côté émetteur étant introduit dans une section de transmission (5a, 5b, 5c, 5d) correspondant à ce signal partiel ($S_1$, $S_2$, $S_3$, $S_4$) et est transmis au côté récepteur de la section de transmission (5a, 5b, 5c, 5d) correspondante et

(b) dans lequel, au niveau des côtés récepteurs des sections de transmission (5a, 5b, 5c, 5d), les signaux partiels ($S_1$, $S_2$, $S_3$, $S_4$), sont réassemblés afin d'obtenir un signal de réception numérique (E),

**caractérisé en ce que**

(c) sur le côté récepteur, les erreurs de bits dans le signal de réception (E), y compris leur position dans le signal de réception (E), sont détectées,

(d) la position détectée des erreurs de bits et la correspondance, également connue sur le côté récepteur, des différents octets du signal de réception numérique (E) avec les différents signaux partiels ($S_1$, $S_2$, $S_3$, $S_4$) et les sections de transmission (5a, 5b, 5c, 5d), permettent de déterminer quel signal partiel ($S_1$, $S_2$, $S_3$, $S_4$) correspondait aux erreurs de bits détectées et

(e) cela permet de déterminer un ou plusieurs paramètres qui caractérisent la qualité de transmission de la section de transmission (5a, 5b, 5c, 5d) correspondant à chaque signal partiel ($S_1$, $S_2$, $S_3$, $S_4$) et/ou permettent de déduire par quels mécanismes d'erreurs de la section de transmission (5a, 5b, 5c, 5d) correspondante, sa qualité de transmission est dégradée.

2. Procédé selon la revendication 1, **caractérisé en ce que** le signal d'émission (S) comprend une structure de cadre.

3. Procédé selon la revendication 1 ou 2, **caractérisé en ce que** le signal d'émission (S) est divisé en plusieurs Logical Lanes (LL0 à LL20) qui contiennent chacune un nombre déterminé d'octets du signal d'émission numérique (S) et une ou plusieurs Logical Lanes (LL0 à LL20) sont assemblées en un signal partiel ($S_1$, $S_2$, $S_3$, $S_4$) avec le nombre M de plusieurs signaux partiels ($S_1$, $S_2$, $S_3$, $S_4$), la correspondance entre les octets du signal d'émission (S) et les Logical Lanes (LL0 à LL20) et la correspondance entre les Logical Lanes (LL0 à LL20) et les signaux partiels ($S_1$, $S_2$, $S_3$, $S_4$) sont également connues sur le côté réception.

**4.** Procédé selon l'une des revendications précédentes, **caractérisé en ce que**, pour toutes les sections de transmission (5a, 5b, 5c, 5d) ou pour des sections de transmission sélectionnées, en tant que paramètre, le taux d'erreur de bits ou par la détection si le bit transmis de manière erronée était un bit « 0 » logique ou un bit « 1 » logique, les taux d'erreurs de bits spécifiques sont déterminés pour les valeurs de bits « 0 » logique et « 1 » logique.

**5.** Procédé selon l'une des revendications précédentes, **caractérisé en ce que**, en fonction des paramètres déterminés, les paramètres de la section de transmission (5a, 5b, 5c, 5d) sont réglés de façon à ce qu'une qualité de transmission optimale soit obtenue pour le signal numérique à transmettre.

**6.** Procédé selon l'une des revendications précédentes, **caractérisé en ce que**

(a) dans un ou plusieurs blocs d'octets prédéterminés du signal d'émission numérique (S), une structure binaire déjà connue est écrite,
(b) côté réception, la structure binaire déjà connue est détectée dans les blocs d'octets prédéterminés, également connus côté réception, du signal de réception numérique (E) et les erreurs de bits possibles sont détectées dans la structure binaire déjà connue et
(c) la position de l'erreur de bit dans le signal de réception (E) permet de déterminer à quel signal partiel ($S_1$, $S_2$, $S_3$, $S_4$) correspondent les erreurs de bits détectées.

**7.** Procédé selon la revendication 2 et 6, **caractérisé en ce que** la longueur de la structure binaire déjà connue est choisie de façon à ce que la structure binaire soit transmise de manière répartie sur les blocs d'octets prédéterminés de plusieurs cadres.

**8.** Procédé selon la revendication 7, **caractérisé en ce que** le début de la structure binaire déjà connue est posée sur le premier octet prédéterminé d'un cadre, ce cadre présentant un marquage connu prédéterminé côté réception.

**9.** Procédé selon la revendication 3 et une des revendications 6 à 8, **caractérisé en ce que** les positions des blocs d'octets prédéterminés à l'intérieur du signal d'émission (S) sont choisies de façon à ce que les octets de la structure binaire déjà connue sont répartis de manière sensiblement uniforme sur les Logical Lanes (LL0 à LL20) ou de manière sensiblement uniforme sur les signaux partiels ($S_1$, $S_2$, $S_3$, $S_4$).

**10.** Procédé selon la revendication 2 et 3 et une des revendications 6 à 9, **caractérisé en ce que** la position du ou des blocs d'octets prédéterminés à l'intérieur de chaque cadre reste constante et **en ce que** la correspondance entre les octets ou les blocs d'octets et les Logical Lanes (LL0 à LL20) est déterminée selon un système de roulement.

**11.** Procédé selon la revendication 10, **caractérisé en ce que** la structure binaire déjà connue est transmise au moins le nombre N de Logical Lanes (LL0 à LL20) fois successivement et **en ce que** le système de roulement et la position du ou des blocs d'octets prédéterminés à l'intérieur de chaque cadre est choisie et harmonisée de façon à ce que, après une transmission N fois de la structure binaire déjà connue, la structure binaire entière est contenue une fois à l'intérieur de chaque Logical Lane (LL0 à LL20).

**12.** Procédé selon l'une des revendications 3 ou 4 à 11, dans la mesure ou celles-ci font référence à la revendication 3, **caractérisé en ce que**

(a) le signal d'émission numérique (S) à transmettre contient une redondance permettant une correction des erreurs sans voie de retour,
(b) côté réception, une correction des erreurs sans voie de retour est appliquée au signal de réception numérique (E),
(c) la correction des erreurs sans voie de retour ou la comparaison entre le signal non corrigé et le signal corrigé permet de déterminer la position des bits ou au moins la position des octets de chaque erreur de bit corrigible à l'intérieur du cadre concerné du signal de réception (E),
(d) la position de l'erreur de bit dans le signal de réception (E) permet de déterminer à quelle Logical Lane (LL0 à LL20) ou à quel signal partiel ($S_1$, $S_2$, $S_3$, $S_4$) correspondent les erreurs de bits détectées.

**13.** Procédé selon l'une des revendications précédentes, **caractérisé en ce que** le signal d'émission numérique (S) est crypté avant la division en signaux partiels ($S_1$, $S_2$, $S_3$, $S_4$) et **en ce que**, côté réception, le signal de réception numérique (E) est décrypté.

**14.** Procédé selon la revendication 13, **caractérisé en ce que**, côté réception, le signal de réception numérique (E) est décrypté avant la réalisation d'une correction d'erreur sans voie de retour.

**15.** Procédé selon la revendication 13 ou 14, **caractérisé en ce que**, en plus de la détection d'une erreur de bit dans le signal de réception numérique (E) encore crypté, on détermine si, au niveau de la position du bit transmis de manière erroné, la valeur du bit est égal au « 0 » logique ou au « 1 » logique et **en ce que** des taux d'erreurs de bits spécifiques pour les valeurs de bits « 0 » logique et/ou « 1 » logique en sont déduits pour toutes les sections de transmission (5a, 5b, 5c, 5d) ou des sections de transmission sélectionnées.

**16.** Procédé selon la revendication 13 ou 14, **caractérisé en ce que** le signal de réception (E) encore crypté et le signal de réception (E) décrypté mais corrigé et à nouveau crypté de manière identique, sont comparés et **en ce que** cette comparaison permet de déterminer aussi bien la position des bits transmis de manière erronée que l'information indiquant si le bit transmis de manière erroné était initialement, dans le signal d'émission numérique (S) crypté, un « 0 » logique ou un « 1 » logique ou si le bit transmis de manière erronée est, dans le signal de réception numérique (E) crypté, un « 0 » logique ou un « 1 » logique.

**17.** Procédé selon la revendication 16, **caractérisé en ce que** la comparaison du signal de réception (E) encore crypté et du signal de réception (E) décrypté mais corrigé et à nouveau crypté de manière identique permet de déterminer également les positions des bits ou les positions des octets des erreurs corrigibles.

**18.** Procédé de transmission d'un signal numérique en multiplexe inverse, plus particulièrement par l'intermédiaire d'un réseau de transport optique,

(a) dans lequel un dispositif d'émission (3) divise un signal d'émission numérique (S) à transmettre, qui présente une structure de cadre, en plusieurs Logical Lanes (LL0 à LL20) qui contiennent chacune un nombre déterminé d'octets du signal d'émission numérique (S),

(b) dans lequel le dispositif d'émission (3) divise le signal d'émission numérique (S) à transmettre en plusieurs signaux partiels ($S_1$, $S_2$, $S_3$, $S_4$) et introduit chaque signal partiel ($S_1$, $S_2$, $S_3$, $S_4$) vers un côté d'émission d'une section de transmission (5a, 5b, 5c, 5d) correspondant exclusivement à ce signal partiel ($S_1$, $S_2$, $S_3$, $S_4$) et

(c) dans lequel le dispositif de réception (6) réassemble les signaux partiels ($S_1$, $S_2$, $S_3$, $S_4$) transmis vers un côté de réception des plusieurs sections de transmission (5a, 5b, 5c, 5d) en un signal de réception numérique (E),

**caractérisé en ce que**

(d) le dispositif de réception (6) est conçu de façon à ce que

(i) dans le signal de réception numérique (E)

(1) une structure binaire déjà connue, qui a été écrite par le dispositif d'émission (3) dans un ou plusieurs blocs prédéterminés d'octets du signal d'émission numérique (S), est déterminée et les erreurs de bits sont détectées en déterminant l'emplacement dans le signal de réception numérique (E) ou

(2) une correction d'erreur sans voie de retour est appliquée sur le signal de réception numérique (E), qui contient une redondance permettant une correction d'erreur sans voie de retour, la correction d'erreur sans voie de retour ou la comparaison du signal de réception numérique (E) corrigé avec le signal de réception numérique (E) non corrigé permet de détecter des erreurs de bits en déterminant l'emplacement dans le signal de réception numérique (E),

(ii) l'emplacement déterminé des erreurs de bits dans le signal de réception numérique (E) et la correspondance, connue du dispositif de réception (6), entre les différents octets du signal de réception numérique (E) et les différents signaux partiels ($S_1$, $S_2$, $S_3$, $S_4$) et les sections de transmission (5a, 5b, 5c, 5d), permettent de déterminer à quel signal partiel ($S_1$, $S_2$, $S_3$, $S_4$) correspondent les erreurs de bits détectées et

(iii) un ou plusieurs paramètres peuvent ainsi être déterminés, qui caractérisent la qualité de transmission de chaque section de transmission (5a, 5b, 5c, 5d) correspondant à chaque signal partiel ($S_1$, $S_2$, $S_3$, $S_4$) et/ou qui permettent de déterminer par quels mécanismes d'erreurs de la section de transmission (5a, 5b, 5c, 5d) concernée sa qualité de transmission est dégradée.

**Fig. 1**

**Fig. 2**

| ... | LL0 | LL0 | LL0 | LL0 |
|-----|-----|-----|-----|-----|

| ... | LL1 | LL1 | LL1 | LL1 |
|-----|-----|-----|-----|-----|

| ... | LL2 | LL2 | LL2 | LL2 |
|-----|-----|-----|-----|-----|

| ... | LL3 | LL3 | LL3 | LL3 |
|-----|-----|-----|-----|-----|

| ... | LL4 | LL4 | LL4 | LL4 |
|-----|-----|-----|-----|-----|

S

| ... | LL20 | LL20 | LL20 | LL20 |
|-----|------|------|------|------|

| ... | LL0 | LL1 | LL2 | LL3 | LL4 | LL0 | ... | S$_1$ |
|-----|-----|-----|-----|-----|-----|-----|-----|-------|

| ... | LL5 | LL6 | LL7 | LL8 | LL9 | LL5 | ... | S$_2$ |
|-----|-----|-----|-----|-----|-----|-----|-----|-------|

| ... | LL10 | LL11 | LL12 | LL13 | LL14 | LL10 | ... | S$_3$ |
|-----|------|------|------|------|------|------|-----|-------|

| ... | LL15 | LL16 | LL17 | LL18 | LL19 | LL15 | ... | S$_4$ |
|-----|------|------|------|------|------|------|-----|-------|

Fig. 3

19

**Fig. 4**

**Fig. 5**

**IN DER BESCHREIBUNG AUFGEFÜHRTE DOKUMENTE**

**In der Beschreibung aufgeführte Patentdokumente**

- US 20040047408 A1
- US 6438717 B1